# EUROPEAN PATENT APPLICATION

(11) **EP 2 410 645 A1**
(43) Date of publication of application: **25.01.2012**
(21) Application number: 11425190.3
(22) Date of filing: 15.07.2011
(51) Int. Cl.: H02M 1/10, H02M 3/337, H02J 3/38

(54) **Electronic conversion circuit for photovoltaic plants**

(30) Priority: 20.07.2010 IT VI20100196
(71) Applicant: Valenia s.r.l., 36030 Villaverla (VI) (IT)
(72) Inventor: Morato, Antonio, 36030 Villaverla (VI) (IT)
(74) Representative: Iannone, Carlo Luigi

(57) **Abstract**

An electronic conversion circuit for photovoltaic plants, including, in series, a source of photovoltaic energy (10, 20, 30), a DC-DC PWM and high-frequency converter (11, 21, 31), a PWM and high frequency transformer (12, 22, 32), a rectifier block (13, 23, 33), filter (14, 24, 34) and a DC-AC converter (15, 25, 35), with which the source of photovoltaic energy (10, 20, 30) is connected; the DC-AC converter (15, 25, 35) is also connected with an AC electric power line or system (16, 26, 36) and/or with one or more users of the electric line (16, 26, 36) and the transformer (12, 22, 32) has, both at the primary and at the secondary circuit, at least two equal windings, wherein the equal windings of the primary circuit are connected in series or in parallel and at least one of the equal windings of the secondary circuit is selected by means of at least one first switching element or contact (S9) of a switching block (28).

## Description

The present invention generally relates to an electronic conversion circuit for photovoltaic plants and, particularly, concerns an optimized implementation of the operation of a photovoltaic conversion circuit or chain, with high frequency insulation transformer PWM controlled, when the supply voltage varies.

The insertion of a high frequency insulation transformer, controlled according to a mode of PWM ("Pulse Width Modulation") type, inside an electronic conversion circuit (inverter) for applications in the photovoltaic field is yet a known technology.

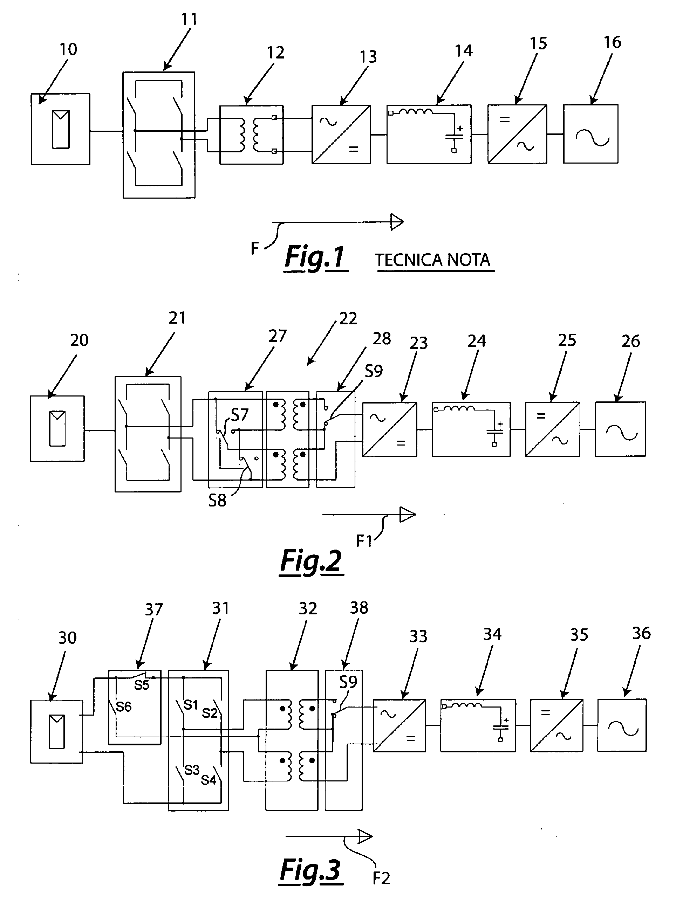

In particular, the patent document WO 02/087062 discloses a current converter (inverter), which can be used for photovoltaic plants, which presents a circuit scheme such as that one shown in the attached figure 1, in which the energy flow is directed according to the direction of the arrow F and in which there are present in series the following blocks: a generic photovoltaic source 10, a high-frequency PWM (i.e., with pulse width modulation) DC-DC converter 11, a high frequency (HF) and PWM transformer 12, a rectifier circuit 13, a filter 14 and a DC-AC converter 15, with which the photovoltaic source 10 or a generic energy source, such as a solar generator and/or a battery, can be connected.

In addition, the AC-DC converter 15 can also be connected with an electric alternating current (AC) line or system 16 and/or one or more users of the electric line 16 itself.

In particular, the high frequency PWM transformer 12 includes, on the side of the primary winding, a series of windings for various input voltage ranges, which can be selectively connected in series, by means of a switch device, on the basis of the value of the input supply voltage, so that it is possible to select different conversion ratios of the transformer 12 and to get a work cycle of the DC-DC converter 11 which can be approximated to an ideal work cycle.

In practice, the DC-DC converter 11 is controlled depending on the voltage value present at the input of control device of a switch, which acts on the primary winding of the transformer 12, moving from one winding to another and then switching among a range of prefixed transformation ratios, in such a way that the work cycle of the DC-DC converter 11 can be approximated to an ideal work cycle.

However, even the circuit solution just described presents some drawbacks, among which the partial optimization of the energy flow on the high frequency transformer 12.

The present invention thus intends to overcome this and other drawbacks typical of the current state of the art.

In particular, primary purpose of the invention is to create an electronic conversion circuit for photovoltaic plants, which fully optimizes the energy flow on the high frequency insulation transformer controlled with the PWM technique, usually used in the conversion circuits for photovoltaic plants of known type.

Another purpose of the invention is to provide an electronic conversion circuit for photovoltaic plants, which present an energy efficiency higher than that one which can be obtained through electronic conversion circuits for photovoltaic plants of known type.

A further purpose of the present invention is to devise an electronic conversion circuit for photovoltaic plants, which allow to reduce the valued of the maximum reverse voltage on the rectifier diodes in the rectifier block of the conversion circuits for photovoltaic plants of traditional type.

These and other purposes are achieved by an electronic conversion circuit for photovoltaic plants according to the attached claim 1.

Further technical features of detail of the electronic conversion circuit, which is the object of the present invention, are also reported in the corresponding dependent claims.

Advantageously, the electronic circuit of the invention allows full optimization of the induction in the transformer core, as well as an optimization of the losses of the switching elements, basically favouring the complete transfer of the energy towards the power system.

Further technical features and advantages of the electronic conversion circuit for photovoltaic plants, according to the present invention, will appear to a greater extent from the description that follows, related to preferred embodiments of the electronic conversion circuit here claimed, provided by illustrative and preferred, but not limited, way and from the attached drawings, in which:
- figure 1 is a provisional block diagram of an electronic conversion circuit for photovoltaic plants of traditional type;
- figure 2 is a provisional block diagram of a first embodiment pf the electronic conversion circuit for photovoltaic plants according to the present invention;
- figure 3 is a provisional block diagram of a further embodiment of the electronic conversion circuit for photovoltaic plants according to the present invention.

With particular reference to the attached figure 2, a generic source of photovoltaic energy is indicated with 20, with which a high frequency PWM converter 21, a high frequency PWM transformer 22, a rectifier block 23, a filter 24 and a DC-AC converter 25, connected with an electric power line or system 26, are connected in series.

In particular, according to the current circuit solution, the high frequency PWM transformer 22 consists of two identical primary windings, which can be combined in series or in parallel each other through the synchronously operated contacts S7, S8 of the block 27; the block 28, instead, selects by means of the contact S9, one of the two or both the windings of the secondary circuit of the transformer 22.

Since, the output power being equal, the lower is the voltage coming from the source of photovoltaic energy 20, the higher is the input current of the transformer 22, it is convenient, in order to keep constant the losses at the primary winding of the transformer 22, to increase its section; this can be made by means of the contacts S7 and S8 of the block 27, connecting in parallel the two primary windings of the transformer 22, so as to thus double the primary section of the primary winding.

Furthermore, the block 28, through the switching element or contact S9, connects in series the two secondary windings of the transformer 22, in order to raise the voltage present at the secondary winding of the transformer 22 to a value suitable to allow the transfer of energy towards the electric power line or system 26 (according to the direction of the arrow F1 in the appended figure 2).

The parallel connection of the two primary windings of the transformer 22 at the same time allows to use a smaller number of primary turns, thus optimizing also the induction of the ferromagnetic core to a proper value, in terms of sizing of the transformer 22.

The block 27 may also, possibly, be reproduced even at the secondary winding of the transformer 22, in place of the block 28, in very mirror way with respect to the primary winding of the transformer 22, with the further possibility to also connect in series or parallel the two secondary windings, according to the needs; this clearly involves the use of an additional switching element or exchange contact.

In addition, in order to optimize the induction in the core of the transformer 22, even with any intermediate input voltages, it is possible to vary the switching frequency (switching) continuously or at set intervals (steps), on the basis of the needs.

Appended figure 3 shows a circuit embodiment alternative to that one shown in figure 2 and previously described.

In this second proposed circuit, a generic source of photovoltaic energy is indicated with 30, with which a high frequency PWM converter 31, a high frequency PWM transformer 32, a rectifier block 33, a filter 34 and a DC-AC converter 35, connected with an electric power line or system 36, are connected in series.

The introduction of the block 37, in combination with the converter block 31, completely changes the circuit configuration in comparison with the scheme of the attached figure 2.

Indeed, when the voltage at the output of the source of photovoltaic energy 30 has high value, the switch or contact S5 of the block 37 is, the contact S6 of the block 37 is opened and the contacts S1, S2, S3 and S4 of the converter 31 are PWM controlled, so that the primary windings of the transformer 32 are in series and the circuit takes an overall configuration of full bridge.

When, instead, the voltage at the output of the source of photovoltaic energy 30 has low value, the contacts S1, S2 and S5 are opened, the contact S6 of the block 37 is closed and the contacts S3 and S4 of the converter 31 are PWM controlled, so that the primary windings of the transformer 32 are controlled in a "push-pull" configuration.

The result is, as in the circuit previously described, the same optimization of the induction in the ferromagnetic core of the transformer 32 and, in case of "push-pull" configuration, the optimization of the losses of the switching elements, being present in this case only two of them (S3 and S4), is also achieved. The block 38, through the switching element S9, connects in series the two secondary windings of the transformer 32, thus raising the voltage present at the secondary winding of the transformer 32 to a value suitable to allow the transfer of energy towards the electric power line or system 36 (according to the direction of the arrow indicated with F2 in figure 3 enclosed).

Moreover, the windings of the secondary circuit of the transformer 32 can possibly be connected in series or in parallel, similarly to what yet explained for the circuit of figure 2 previously described; in this case, it is however necessary to provide the use of an additional switching element or exchange contact.

Even in this case, finally, in order to fully optimize the induction in the ferromagnetic core of the transformer 32, also with any intermediate input voltages, it is possible to vary the switching frequency (switching) continuously or at set intervals (steps), according to the needs.

The technical features of the electronic conversion circuit for photovoltaic plants, which is the object of the present invention, as well as the advantages, compared to known technique, are clear from the description made.

It is, finally, clear that many other variations may be made to the electronic conversion circuit in question, without departing from the principle of novelty intrinsic in the inventive idea expressed here, as it is clear that, in the practical implementation of the invention, materials, shapes and sizes of the illustrated details can be changed, as needed, and replaced with others technically equivalent.

Where the constructive features and techniques mentioned in the following claims are followed by reference numbers or signs, those reference signs have been introduced with the sole objective of increasing the intelligibility of the claims themselves and therefore they have no limiting effect on the interpretation of each element identified, by way of example only, by these reference signs.

## Claims

1. Electronic conversion circuit for photovoltaic or solar plants, including, in series, at least one source of photovoltaic energy (10, 20, 30), at least one DC-DC PWM and high-frequency converter (11, 21, 31), at least one PWM and high frequency transformer (12, 22, 32), at least one rectifier block (13, 23, 33), at least one filter (14, 24, 34) and at least DC-AC converter (15, 25, 35), with which said source of photovoltaic energy (10, 20, 30) is connected, said DC-AC converter (15, 25, 35) also being connected with an AC electric power line or system (16, 26, 36) and/or with one or more users of said AC electric line (16, 26, 36), **characterized in that** said transformer (12, 22, 32) has, both at the primary and at the secondary circuit, at least two equal windings, wherein said equal windings of the primary circuit are connected in series or in parallel, while at least one of said equal windings of the secondary circuit is selected by means of at least one first switching element or contact (S9) of at least one first switching block (28).

2. Electronic conversion circuit as claim 1, **characterized in that** said equal windings of the primary circuit of said transformer (12, 22, 32) are connected in series or in parallel by means of at least two switching elements or contacts (S7, S8) of at least one second switching block (27), said contacts (S7, S8) being synchronously driven.

3. Electronic conversion circuit as claim 1, **characterized in that** said equal windings at the primary circuit are connected in parallel and said equal windings at the secondary circuit are serially connected, in order to raise the voltage at the secondary circuit of said transformer (12, 22, 32) to a suitable value to allow the transfer of energy to (F, F1, F2) said mains or electric line (16, 26, 36).

4. Electronic conversion circuit as claim 1, **characterized in that** both said equal windings at the primary circuit and said equal windings at the secondary circuit are connected in parallel.

5. Electronic conversion circuit as claim 1, **characterized in that** the switching frequency of said PWM transformer (12, 22, 32) is continuously or periodically switched.

6. Electronic conversion circuit as claim 1, **characterized in that** at least one third switching block (37) is interposed between said source of photovoltaic energy (10, 20, 30) and said DC-DC converter (11, 21, 31), said third switching block (37) having at least two first switching elements or contacts (S5, S6), one open and one closed, said DC-DC converter (11, 21, 31) also having a plurality of second switching elements or contacts (S1, S2, S3, S4) including at least two PWM-driven contacts.

7. Electronic conversion circuit as claim 6, **characterized in that** at least two of said second switching elements or contacts (S1, S2, S3, S4) are open, so that said equal windings at the primary circuit of said transformer (12, 22, 32) are controlled in a "push-pull" configuration.

8. Electronic conversion circuit as claim 6, **characterized in that** said equal windings at the secondary circuit of said transformer (12, 22, 32) are serially connected, through said first switching element or contact (S9), so as to increase the voltage at the secondary of said transformer (12, 22, 32) to a suitable value to allow the transfer of energy to (F, F1, F2) said mains or electric line (16, 26, 36).

9. Electronic conversion circuit as claim 6, **characterized in that** said equal windings at the secondary circuit of said transformer (12, 22, 32) are connected in parallel, through at least two switching elements or contacts (S9).

10. Electronic conversion circuit as claim 6, **characterized in that** the switching frequency of said PWM transformer (12, 22, 32) is continuously or periodically switched.
